# EUROPEAN PATENT SPECIFICATION

(11) **EP 0 691 171 B1**
(45) Date of publication and mention of the grant of the patent: **25.11.1998**
(21) Application number: 94305003.9
(22) Date of filing: 07.07.1994
(51) Int. Cl.: B23K 3/03

(54) **Hot gas soldering instrument**
Heissgas-Lötwerkzeug
Outil de brasage à gas chaud

(43) Date of publication of application: 10.01.1996
(73) Proprietor: Fortune, William Samuel, Malibu California 90265 (US)
(72) Inventor: Fortune, William Samuel, Malibu California 90265 (US)
(74) Representative: Greenwood, John David

(56) References cited:
- FR-A- 2 075 593
- US-A- 4 419 566
- US-A- 4 564 135
- US-A- 5 054 106

## Description

This invention relates generally to the field of hand held soldering/desoldering tools and, more particularly, to such instruments which utilize a stream of gas to convey heat from its source along a path to the soldering point, the term "hand held" being intended to include robotic or robot-like applications. The term "gas" as used here usually means ambient air, but may include inert or relatively inert gases such, for example, as carbon dioxide or nitrogen or the noble gases or the like as when oxidations, corrosive reactions, or other undesired chemical action is to be minimized.

The advantages of hot gas soldering have become known and understood in recent years and are discussed in detail in Applicant's United States Patents: HOT AIR SOLDERING AND RESOLDERING SYSTEM, No. 4, 419, 566; HOT AIR HEATED SOLDERING INSTRUMENT, No. 4, 926, 028; and HOT GAS SOLDERING SYSTEM, No. 5, 054, 106. Hot gas soldering by a stream of very hot gas with a small cross section can apply precisely the desired quantity of heat at the desired work point without deleteriously heating other adjoining or contiguous material or objects. In addition, the gas stream presents to the work point a substantially constant temperature heat source - unlike a conventional soldering tip the temperature of which inherently varies somewhat as varying amounts of heat are drawn therefrom and then replenished along a metal conduction path. A related advantage is that the gas may be heated instantly as it flows across, in heat exchange relation, the heat source and is instantly applied to the work point while a conventional soldering tool, exhibiting a significantly greater degree of thermal inertia, requires that heat be conducted through the solid components of the tool until the tip, inherently at some distance from the source, reaches a temperature adequate for working.

It may also be pointed out that by hot gas techniques, a low inertial soldering tip may be heated on its inside by a internally directed stream of hot gas providing most of the above advantages. In addition, although the soldering action is more like conventional soldering, the tip may be very desirably of iron composition since copper is not needed for its high thermal conductivity. Thusly avoided are the weight and expense of copper and its plating as well as its high vulnerability to decay by chemical reactions aggravated by it intense thermal environment.

These and other advantages of hot gas soldering have not been fully achieved in the prior art because of the difficulty of generating the gas stream, satisfactorily heating it, and providing means for shaping it and directing it upon the work point.

It is an object of the present invention to provide a hot gas soldering system which achieves these advantages of hot gas techniques.

Other objects of the present invention are to provide:
a system including a soldering tip which is substantially instantly heated and continuously supplied with heat by a gas stream along a otherwise high thermal resistance path,
a system which substantially instantly generates and applies to a work point a hot gas stream of predetermined cross section at a temperature of the order of 815°C (1500 degrees Fahrenheit) and with a predetermined desired rate of heat energy flow to the work point,
a system in which the soldering tip may idle at a relatively low temperature and yet be instantly heated to its working temperature by the hot gas when desired, thusly providing significant advantages in tip longevity and in its plating requirements,
a system in which the gas supply to the soldering instrument may be somewhat preheated by the electrical conductors conveying power to the heating element and in which the soldering instrument handle is cooled by the flow therethrough of the gas,
gas heating apparatus for such a system which is exceedingly effective and efficient in supplying a very high temperature stream of air for soldering,
a system which is structurally simple, reliable, mechanically tugged, and inexpensive to manufacture, and
a system in which the temperature of the heating element is electronically controlled remotely from the body of the soldering instrument itself.

The present invention is as claimed in the claims.

Briefly these and other objects are achieved in accordance with the structural aspects of a presently preferred example of the invention in which a hot air heated soldering tip is longitudinally slotted to permit the flow of the hot gas over a large surface portion of its mass and thereby very efficiently and effectively transfer heat energy from the electric heating unit of the soldering tool to the actual working surface of its soldering tip. The slots extend from the rear of the tip forwardly through at least a major portion of the length of the tip element. The hot air is then exhausted laterally in some embodiments, rearwardly in some, and forwardly in a laminar flow relation over the forward surfaces of the tip in still other embodiments.

When tip longevity, energy conservation, or plating constraints have priority, a deliberately thermally resistive path is provided in the structural connection between the heating element and the working tip whereby the idle temperature of the tip is minimized. In a presently preferred form of the invention this resistive path is provided by a thin walled stainless steel tubular support member which extends forwardly from the heating element and carries the soldering tip at its forward end.

Embodiments of the present invention will now be considered, by way of example only, with reference to the accompanying drawings, of which:
- FIGURE 1: is an overall view of an example of a hot gas soldering system constructed in accordance with the principles of the present invention;
- FIGURE 2: is an exploded view of the soldering tip, retaining nut, and heat transfer tube portions of the system of FIGURE 1;
- FIGURE 3: is a longitudinal sectional view of the front portion of the structure of FIGURE 1 showing the apparatus of FIGURE 2 in its assembled configuration;
- FIGURE 4: is a longitudinal sectional view of the tip portions of an alternative example of the invention;
- FIGURE 5: is a similar view of another version of the invention;
- FIGURE 6: is a similar view of yet another example of the invention;
- FIGURE 7: is a similar view of still another example of the invention;
- FIGURE 8: is a partially sectioned view of an example of the invention including a needle tip heated by a laminar flow of hot air along slots, channels, or flats in its sides;
- FIGURES 9A-9F: are cross sectional views of examples of the structure of FIGURE 8 taken along the reference lines 9-9 thereof; and
- FIGURE 10: is an elevational view, partially in section, of an example similar to that of FIGURE 8 having an elongated bendable tubular support for the needle tip.

### DETAILED DESCRIPTION OF PREFERRED EMBODIMENT

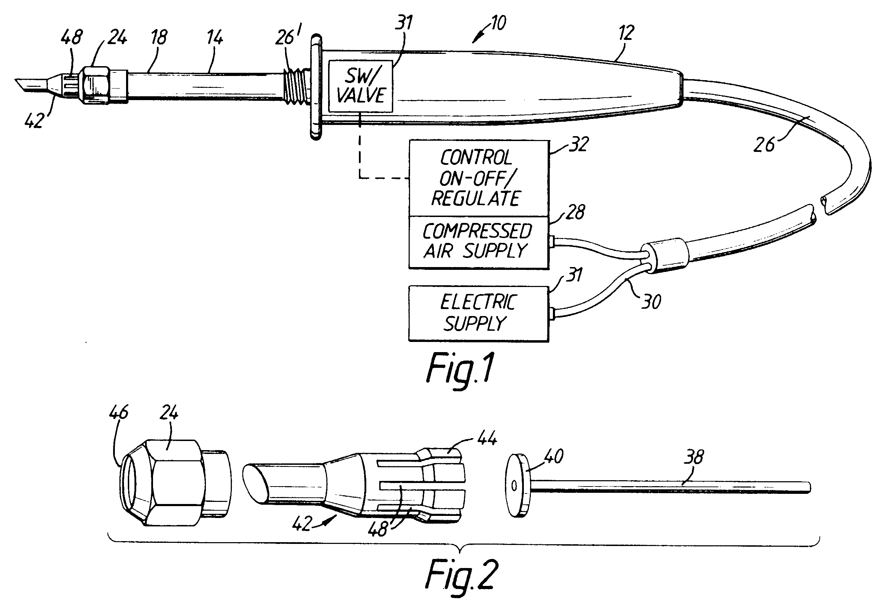

The example of the invention illustrated in FIGURES 1, 2, and 3 includes a hand held soldering instrument 10 having a handle portion 12 which supports a forwardly extending stainless steel tube 14 which houses, in turn, a hollow cylindrical ceramic heating element 16 with a deposited resistive heater 17 contiguously to its forward end, and which is provided at its tip 18 with external threads 20 adapted to mate with the internal threads 22 of a retaining nut 24. A second set of retaining threads 26' is shown disposed contiguously to the handle portion 12 and is useful in attaching an outer sleeve over the heater tube 14, its purposes being otherwise deemed not pertinent to this disclosure.

At the rear of the handle portion 12, a coupling to a combination air hose and electrical cable housing 26 is shown. A supply of compressed gas such as, for example, an air compressor 28 is coupled to the housing 26 such that air may be supplied from the source 28, through the housing 26 wherein it provides some cooling for the electrical leads 30 from a power supply 31 which may desirably be of the character described in United States Patent No.'s 4,507,546, and 4,734,559 issued to William S. Fortune and Wayne A. Murray. Such a power supply circuit remotely controls the temperature of the heating element heater 17 by using, for a very short portion of the period of each cycle, including the inflection point, of the applied alternating current to effect a resistance measurement of the electric heating element 17, the magnitude of its electrical resistance being a function of its temperature. A signal representative of the instantaneous value of the resistance is then generated which is used in a feedback mode to control the current flow to the heating element to cause it to be maintained at a predetermined, desired temperature. Thusly, without a separate sensor in the soldering tip or its heater and without separate leads being used for a temperature feedback signal, essentially full wave power may be continuously impressed on the heater. Alternatively, however, a conventional separate sensor technique may be utilized when desired.

The air supply may be continuously energized with a finger tip valve in the handle 12 controlling the flow of air through the heating element; or a remote electrical switch 31 in the handle may turn the compressor on as desired; or the supply 28 may be controlled by a separate switch such as a hand or foot momentary contact switch 32. It may be noted that the air flows through the interior of the handle 12 which may function as a plenum chamber and thence through the stainless steel heater tube 14 behind the heater 17; and this flow of coolant fluid may significantly cool the handle 14 adding comfort for the operator.

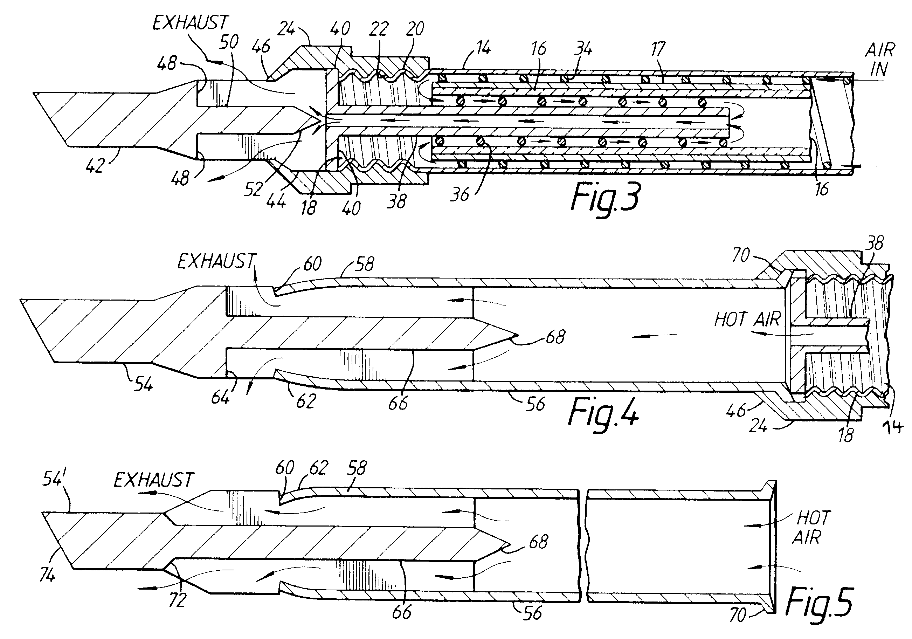

In FIGURE 3 the path of the air forwardly through the tube 18 is seen to be over the outer surface of the ceramic heater tube 16 in a helical pattern between the turns of a spring-like element 34 to maximize the heat exchange between the heater 17 and the air. At the forward end 18 of the tube 14 the air is turned radially inwardly and thence rearwardly along the turn of a second heat exchange enhancing spring-like element 36 disposed between the inner surface of the heater tube 16 and the outer surface of a copper, heat collector tube 38. The air is then again turned radially inward and passed forwardly through the collector tube 38. The forward end of the tube 38 is formed in a flange 40 having an outer diameter approximately equal to that of the end 18 of the tube 14.

A slotted soldering tip 42 is shown disposed with its rear surface pressed against the forward surface of the flange 40. It is formed with an enlarged diameter retaining shoulder 44 about its rear end and is held by a reduced diameter, inwardly extending retaining shoulder 46 forming the forward lip of the retaining unit 24.

The tip 42 is provided with a set of four but preferably six or eight, or more, slots 48 which extend from its rear surface to, in this example, a point midway along the length of the tip element. The slots extend radially from a core portion 50 which may, as shown, be streamlined to a point 52 to aid in the flow of the heated air from the forward end of the collector tube and through the slots 48 to exhaust laterally outwardly as indicated by the "exhaust" arrows.

In FIGURE 4 the slotted soldering tip 54 is provided with a stainless steel extension support tube 56. Instead of the enlarged diameter retaining shoulder 44 of the soldering tip 42, the tip 54 has a tapered groove 58 formed about its rear body portion and terminates in a retaining shoulder 60 at its forward end. The forward end 62 of the tube 56 is shown crimped radially into the groove and abutting the shoulder 60 to support the tip 54, the tube otherwise having an inner diameter equal to that of outer body of the rear portion of the tip body. As in the previous example, the tip 54 is provided with a set of slots 64 which extend from the rear of the tip to a point on its body forward of the crimped end of the support tube 56. An inner core 66 determines the radially inward extent of the slots 64 and may be terminated at its rear end in a streamlining point 68.

The tip 54 by its support tube 56 is secured to the front end 18 of the tube 14 by the retaining nut 24 which, as shown, engages a rear, retaining flange 70 on the support tube 56. Again the flange 40 of the heat collector tube 38 is compressed between the soldering tip, or its support, and the threaded end 18 of the support tube 14. As shown, the heated air is exhausted laterally outwardly from the slots forwardly of the front end 62 of the support tube 56.

Referring to FIGURE 5, the support tube 56 and tip 54' may be considered to be identical with that illustrated in FIGURE 4 except that the heat exchanging set of slots 72 extend further forwardly and the exhausted hot air is directed forwardly in a laminar flow relation over the forward portion of the tip 54'. By this means, the hot air may, in addition to heating the working portion 74 of the tip, be useful in providing additional heat to the workpiece as, for example, in preheating it or a component thereon. It is also to be noted that the hot gas may be an inert fluid which shrouds the work point and protects it from oxidation or other corrosive effects.

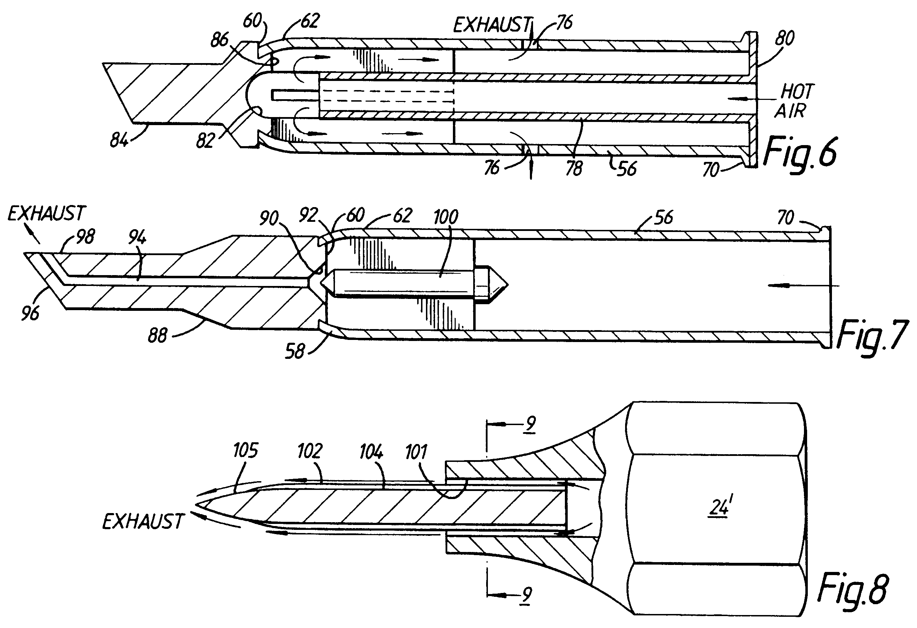

In FIGURE 6, an example of the invention is illustrated in which the exhausted hot air is removed well rearwardly of the working tip in order to keep the moving air away from the workpiece. In this example the support tube 56 is provided with a set of exhaust ports 76 and an inner supply tube 78 which is supported with a rear flange 80 extending radially out to and secured across the rear surface of the retaining flange 70. The supply tube extends forwardly into a central bore 82 of a slotted soldering tip 84. The bore extends forwardly beyond the end of the supply tube and communicates with a set of heat exchange slots 86 whereby hot air traveling forwardly in the supply tube 78 impinges upon the forward end of the bore 82 and the slotted body of the tip 84 and then is exhausted rearwardly through the ports 76.

The example of a slotted tip 88 in FIGURE 7 is formed with a rear bore 90 which extends forwardly into the body of the tip to a point beyond the forward edge of a set of heat exchange slots 92. The bore then communicates with a capillary or duct 94 that extends centrally forwardly to a point contiguous to the working face 96 of the tip and then turns outwardly to a exhaust port 98 from which a jet of hot air may be directed to a specific position on the workpiece. By this means, direct hot air soldering or desoldering may be accomplished; or when desired a combination technique may be employed whereby one part of a soldered terminal of a surface mounted device may be heated by the working face 96 while at the same time another part is heated by the hot air jet. A flow control and support pin 100 is shown inserted into the bore 90. The pin is provided with an enlarged diameter rim at its rear end to form a retaining shoulder against the rear of the body of the tip 88. The forward end of the pin 100 is disposed rearwardly of the front edge of the slots 92 and the bore 90 whereby the flow of hot air is forced through the slots 92, over the front of the pin 100, and into the duct 94. Both ends of the pin 100 may be streamlined as shown. In practice the pin 100 has been found useful in supporting the slotted portion of the body of the tip 88 when the end 62 of the support tube 56 is crimped inwardly into the groove 58.

Referring to FIGURE 8, an example of the invention is illustrated in which the slotted tip has the form of a needle with longitudinal channels along its length to carry the hot air in a laminar flow relation therealong. A retaining nut 24' is adopted at its forward tip to retain in its central bore 101 a needle soldering tip 102. The needle is provided with channels or flats 104 along its length and a pointed forward end 105. In operation, the retaining nut 24' is threaded onto the forward threaded end 18 of the support tube 14 and hot air is fed through the bore 101 along the channels 104 of the needle tip 102. The tip is thereby heated and the laminar flow of hot air forms a precision point of hot air for soldering or for soldering or desoldering. In a presently preferred configuration the needle 102 is of stainless steel, nonsolderable, and is exceedingly useful in removing solder from between closely spaced parallel terminals or other conductors: the hot air melts the solder and the fine point is able to sweep clean the interterminal space.

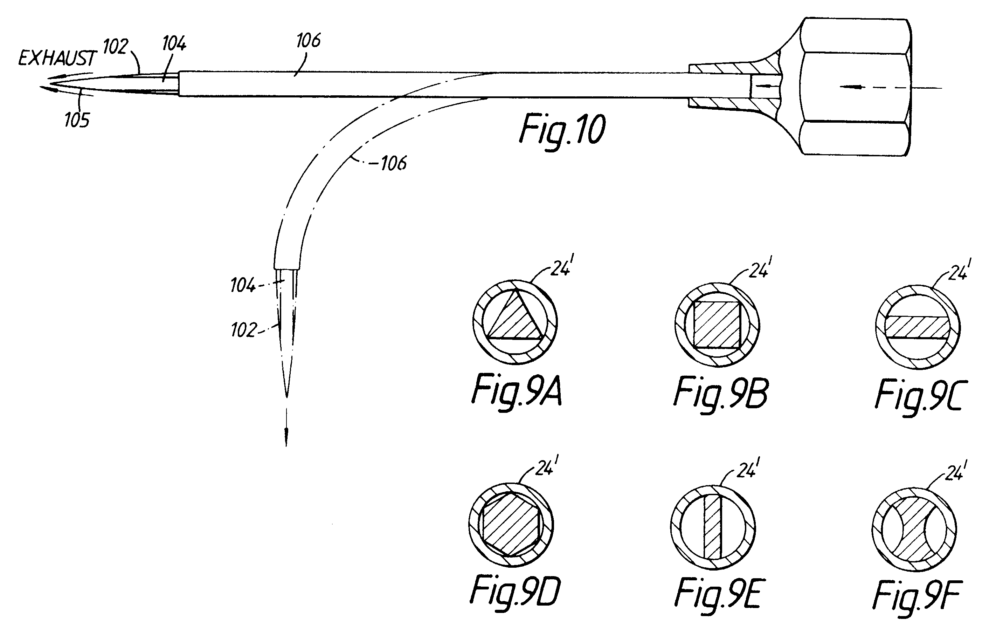

FIGURES 9A through 9F illustrate a series of useful crossectional configurations for the needle tip 102 of FIGURE 8: triangular, square, parallel flats, hexagonal, knife, and opposing channels, respectively.

In FIGURE 10, the needle tip 102 is retained at the forward end of a stainless steel extension tube 106 which is, in turn, at its base end, supported by the forward end of the retaining nut 24'. The extension tube is bendable, as indicated by the broken lines, to optimize its utility in special circumstances.

There have thus been disclosed and described several examples of a hot air heated system in which a soldering tip in the flow of the heated air is slotted to increase greatly its total heat take up ad its rate of heat take up from the hot air. Such a tip may thereby be so quickly heated that it need not be idle at a high temperature in order always to be ready for use by the operator. Accordingly heat energy is saved that would normally be lost from a fully heated idling tip. Of even more significance, however, is the conservation or longevity of the tip because its overall duty cycle is very low; that is, it spends relatively little time at its high working temperature ad therefore deteriorates much more slowly than a prior art tip. An important ramification of this is that plated tip which are expensive and are environmentally offensive to produce or replate last much longer or can be avoided altogether. Thus a plain copper tip exhibits a useful and economic life as does an inexpensively and simply iron or nickel plated tip.

In examples of the invention constructed along the lines of that illustrated in FIGURE 4, the tip 54 may idle at a temperature 149°C (300°F) below that of the heating element and yet be brought up to working temperature in approximately one second because the high velocity air transports the energy to the tip with no thermal inertia while the thin walled stainless steel tube 56 isolates, to a significant extent, the tip from the heater with respect to any metallic conduction path.

## Claims

1. A hot gas soldering tool comprising a hot gas heated soldering tip the tip comprising:
a body (42,102) having an axial length and composed of a high thermally conductive metal and having a front, working end (105) including a solder contacting surface and a rear, heat take up end, characterized by said body being channeled from its said rear end forwardly thereof to a point at least midway along its said length, the channeling consisting of a plurality of elongate heat absorbing surfaces (48,104) of the character to absorb thermal energy in a heat exchange relation with hot gas impressed upon said rear end of said body (42,102) and flowing therefrom along said channeling (48,104).

2. The tool as set forth in Claim 1 in which said channeling comprises a set of axial-radial slots (48).

3. The tool a set forth in Claim 2 in which said slots (48) number at least six and extend radially from a central axial core of said body (42) through the outer surface of said body (42) .

4. The tool as set forth in Claim 3 in which said body (42) comprises a front portion terminated by said solder contacting surface of said working end, a mid portion of increased diameter, and a rear portion terminated by said heat take up end and having a further enlarged diameter portion (44) forming a retaining shoulder, said slots (48) extending from said rear end and at least partially through said mid portion.

5. The tool as set forth in Claim 4 in which either the forward edge of each of said slots (48) is essentially radial whereby said hot gas flowing forwardly along said slots (48) is exhausted therefrom predominantly laterally from said soldering tip body (42), or
the forward edge of each of said slots (72) is slanted significantly forwardly whereby said hot gas flowing forwardly along said slots (72) is exhausted therefrom forwardly and over the outer surface of said front portion of said body (54').

6. The tool as set forth in Claim 3 which further includes a thin walled, thermally resistive outer tube (56) having a forward end (62) disposed over said rear end of said body (54) in a supporting relation therewith and said tube (56) having an elongate central portion extending well rearwardly of said body .

7. The tool as set forth in claim 6 in which the rear end of said central portion of said tube is terminated in an enlarged diameter retaining shoulder (70).

8. The tool as set forth in claim 6 in which said slots (64) extend and exhaust forwardly of said forward end of said tube (56).

9. The tool as set forth in Claim 6 in which said slots extend and exhaust forwardly of said forward end of said tube (56) and in which the rear end of said central portion of said tube is terminated in an enlarged diameter retaining shoulder (70) and said slots terminate rearwardly of said front end of said tube (56) and in which said tube (56) is foramenated in its said central portion to provide said exhaust.

10. The tool as set forth in Claim 9 which further includes an inner, hot gas feed tube (78) supported between said rear end of said outer tube (56) and said body (84) and communicating with the forward portion of said slots.

11. The tool as set forth in Claim 4 in which said body (88) is formed with a duct (94) extending centrally forwardly from and in hot air flow communication with said channeling (92) and in which said forward end of said body (88) is formed with a hot air port (98) for directing hot gas upon a work piece, said duct (94) being in air flow communication with said port (98).

12. A hot gas soldering tool as claimed in claim 1, wherein:
the body (102) comprises an elongated needle-like body (102) having a pointed front end (105) and a rear base end and being composed of a non-solder wetting metal and said channeling being along its length to provide a directed path for hot gas in heat exchange relation with said body (102), and
a base member (24') disposed about said rear base end of said needle-like body (102) and having a circular retaining bore supportingly engaged thereabout while providing uninterrupted air flow axially along its channeled body (102),
said base member (24') including threaded retaining means (24') attaching said body (102) to the front of the soldering tool.

13. The tool as set forth in claim 12 in which said base member includes an elongated bendable support tube (106) extending forwardly from its said retaining means (24') to its supporting engagement about said needle-like body (102).

14. The tool as set forth in either of claims 12 and 13 in which the cross section of said needle-like body (102) apart from its said pointed front end is either: A) triangular whereby the flats of the triangular shape form said channels; or B) square whereby the flats of the square shape form said channels; or C) rectangular whereby the flats of the rectangular shape form said channels; or D) hexagonal whereby the flats of the hexagonal shape form said channels.

## Patentansprüche

1. Heißgas-Lötwerkzeug, das eine mit heißem Gas erhitzte Lötspitze umfaßt, wobei die Spitze umfaßt:
einen Körper (42, 102), der eine axiale Länge aufweist und aus einem stark wärmeleitenden Metall besteht und ein vorderes Arbeitsende (105) aufweist, das eine mit Lot in Kontakt befindliche Fläche und einen hinteren Wärmeaufnahmeteil einschließt, dadurch gekennzeichnet, daß der Körper von seinem hinteren Ende nach vorn zu einem Punkt wenigstens mittwegs entlang seiner Länge mit Kanälen versehen ist, wobei diese Kanäle aus einer Vielzahl von länglichen, Wärme absorbierenden Flächen (48, 104) mit der Eigenschaft bestehen, Wärmeenergie in einer Wärmeaustauschbeziehung mit heißem Gas zu absorbieren, das am hinteren Ende des Körpers (42, 102) hineingepreßt wird und von da entlang der Kanäle (48, 104) strömt.

2. Werkzeug nach Anspruch 1, bei dem die Kanäle eine Gruppe von axial-radialen Schlitzen (48) umfassen.

3. Werkzeug nach Anspruch 2, bei dem die Schlitze (48) wenigstens sechs zählen und sich von einem zentralen axialen Kern des Körpers (42) durch die Außenfläche des Körpers (42) radial erstrecken.

4. Werkzeug nach Anspruch 3, bei dem der Körper (42) einen von der mit Lot in Kontakt befindlichen Fläche des Arbeitsendes abgeschlossenen vorderen Abschnitt, einen Mittelabschnitt mit vergrößertem Durchmesser und einen vom Wärmeaufnahmeende abgeschlossenen hinteren Abschnitt mit einem weiteren Abschnitt (44) mit vergrößertem Durchmesser umfaßt, der eine Rückhalteschulter bildet, wobei sich die Schlitze (48) vom hinteren Ende und wenigstens teilweise durch den Mittelabschnitt erstrecken.

5. Werkzeug nach Anspruch 4, bei dem entweder die vordere Kante jedes der Schlitze (48) im wesentlichen radial ist, wodurch das entlang der Schlitze (48) nach vorn strömende heiße Gas daraus vorwiegend seitlich aus dem Lötspitzenkörper (42) austritt, oder
die vordere Kante jedes der Schlitze (72) merklich nach vorn geneigt ist, wodurch das entlang der Schlitze (72) nach vorn strömende heiße Gas daraus nach vorn und über die Außenfläche des vorderen Abschnitts des Körpers (54') austritt.

6. Werkzeug nach Anspruch 3, das weiterhin eine dünnwandige äußere Röhre (56) mit Wärmewiderstand beinhaltet, die ein über dem hinteren Ende des Körpers (54) in tragender Beziehung damit angeordnetes vorderes Ende (62) aufweist, und die Röhre (56) einen länglichen zentralen Abschnitt aufweist, der sich weit zum hinteren Teil des Körpers erstreckt.

7. Werkzeug nach Anspruch 6, bei dem das hintere Ende des zentralen Abschnitts der Röhre in einer Rückhalteschulter (70) mit vergrößertem Durchmesser endet.

8. Werkzeug nach Anspruch 6, bei dem sich die Schlitze (64) zum vorderen Teil des vorderen Endes der Röhre (56) erstrecken und entleeren.

9. Werkzeug nach Anspruch 6, bei dem sich die Schlitze zum vorderen Teil des vorderen Endes der Röhre (56) erstrecken und entleeren und bei dem das hintere Ende des zentralen Abschnitts der Röhre in einer Rückhalteschulter (70) mit vergrößertem Durchmesser endet und die Schlitze hinter dem vorderen Ende der Röhre (56) enden, und bei dem die Röhre (56) in ihrem zentralen Abschnitt geöffnet (foramenated) ist, um den Austritt zu schaffen.

10. Werkzeug nach Anspruch 9, das weiterhin eine innere Zufuhrröhre (78) für heißes Gas zwischen dem hinteren Ende der äußeren Röhre (56) und dem Körper (84) beinhaltet, die mit dem vorderen Abschnitt der Schlitze in Verbindung steht.

11. Werkzeug nach Anspruch 4, bei dem der Körper (88) mit einer Leitung (94) ausgebildet ist, die sich zentral nach vorn von und in Heißluft-Strömungsverbindung mit den Kanälen (92) erstreckt, und bei der das vordere Ende des Körpers (88) mit einer Öffnung (98) für heiße Luft ausgebildet ist, um heißes Gas auf ein Werkstück zu richten, wobei die Leitung (94) mit der Öffnung (98) in Luftströmungsverbindung steht.

12. Heißgas-Lötwerkzeug nach Anspruch 1, bei dem:
der Körper (102) einen länglichen, nadelförmigen Körper (102) umfaßt, der ein spitzes vorderes Ende (105) und ein hinteres Basisende aufweist und aus einem nicht mit Lot benetzendem Material besteht, und wobei die Kanäle entlang seiner Länge angeordnet sind um einen gerichteten Weg für heißes Gas in Wärmeaustauschbeziehung mit dem Körper (102) bereitzustellen, und
ein Basiselement (24') umfaßt, das um das hintere Basisende des nadelförmigen Körpers (102) herum angeordnet ist und eine kreisförmige Rückhaltebohrung aufweist, die darum herum im tragenden Eingriff steht, während es eine ununterbrochene Luftströmung entlang seines mit Kanälen versehenen Körpers (102) bereitstellt, wobei das Basiselement (24') ein mit Gewinde versehenes Rückhaltemittel (24') beinhaltet, das den Körper (102) am vorderen Teil des Lötwerkzeugs befestigt.

13. Werkzeug nach Anspruch 12, bei dem das Basiselement eine längliche, biegsame Trägerröhre (106) beinhaltet, die sich von ihrem Rückhaltemittel (24') nach vorn zu ihrem tragenden Eingriff um den nadelförmigen Körper (102) herum erstreckt.

14. Werkzeug nach einem der Ansprüche 12 und 13, bei dem der Querschnitt des nadelförmigen Körpers (102) außer an seinem spitzen vorderen Ende entweder
A) dreieckig ist, wodurch die Flächen der dreieckigen Form die Kanäle bilden, oder
B) quadratisch ist, wodurch die Flächen der quadratischen Form die Kanäle bilden, oder
C) rechteckig ist, wodurch die Flächen der rechteckigen Form die Kanäle bilden, oder
D) sechseckig ist, wodurch die Flächen der sechseckigen Form die Kanäle bilden.

## Revendications

1. Outil de soudage à gaz chaud comportant un embout de soudage chauffé par des gaz chaud, comportant :
un corps (42, 102) ayant une longueur axiale et constitué d'un métal thermiquement très conducteur et ayant une extrémité avant active (105) comportant une surface de contact avec de la soudure et une extrémité arrière, de prélèvement de chaleur, caractérisé en ce que ledit corps est creusé de canaux depuis son extrémité arrière en direction de l'avant de celui-ci jusqu'à un point situé au moins à mi-chemin de sa longueur, les canaux étant constitués de plusieurs surfaces (48, 104) allongées d'absorption de chaleur du type à absorber de l'énergie thermique dans une relation d'échange thermique avec un gaz chaud propulsé sur ladite extrémité arrière dudit corps (42, 102) et s'écoulant à partir de celle-ci le long desdits canaux (48, 104).

2. Outil selon la revendication 1 dans lequel lesdits canaux sont constitués d'un ensemble de fentes axiales-radiales (48).

3. Outil selon la revendication 2 dans lequel lesdites fentes (48) sont au moins au nombre de six et s'étendent radialement à partir d'un noyau axial central dudit corps (42) à travers la surface extérieure dudit corps (42).

4. Outil selon la revendication 3 dans lequel ledit corps (42) comporte une partie avant terminée par ladite surface de contact avec de la soudure de ladite extrémité active, une partie médiane de diamètre accru, et une partie arrière terminée par ladite extrémité d'enlèvement de chaleur et ayant une partie de diamètre encore agrandie (44) formant un épaulement de retenue, lesdites fentes (48) s'étendant à partir de ladite extrémité arrière et au moins partiellement à travers ladite partie médiane.

5. Outil selon la revendication 4 dans lequel le bord avant de chacune desdites fentes (48) est pratiquement radial de sorte que ledit gaz chaudss'écoulant vers l'avant le long desdites fentes (48) s'échappent à partir de celui-ci de manière prédominante latéralement à partir dudit corps d'embout de soudage (42), ou le bord avant de chacune desdites fentes (72) est incliné de manière importante vers l'avant de sorte que ledit gaz chauds s'écoulant vers l'avant le long desdites fentes (72) s'échappe à partir de celui-ci vers l'avant et par-dessus la surface extérieure de ladite partie avant dudit corps (54').

6. Outil selon la revendication 3, qui comporte de plus un tube extérieur (56) thermiquement résistif, à paroi mince, ayant une extrémité avant (62) agencée par-dessus ladite extrémité arrière dudit corps (54) dans une relation de support avec celle-ci, et ledit tube (56) comporte une partie centrale allongée s'étendant loin vers l'arrière dudit corps.

7. Outil selon la revendication 6 dans lequel l'extrémité arrière de ladite partie centrale dudit tube se termine par un épaulement de retenue (70) de diamètre agrandi.

8. Outil selon la revendication 6, dans lequel lesdites fentes (64) s'étendent et débouchent vers l'avant de ladite extrémité avant dudit tube (56).

9. Outil selon la revendication 6, dans lequel lesdites fentes s'étendent et débouchent vers l'avant de ladite extrémité avant dudit tube (56) et dans lequel l'extrémité arrière de ladite partie centrale dudit tube se termine par un épaulement (70) dudit tube de diamètre agrandi et lesdites fentes se terminent vers l'arrière de ladite extrémité avant dudit tube (56) et dans lequel ledit tube (56) est percé dans sa partie centrale pour fournir ledit échappement.

10. Outil selon la revendication 9, qui comporte de plus un tube intérieur (78), d'acheminement de gaz chauds, supporté entre ladite extrémité arrière dudit tube extérieur (56) et ledit corps (84) et communiquant avec la partie avant desdites fentes.

11. Outil selon la revendication 4 dans lequel ledit corps (88) est muni d'une canalisation (94) s'étendant centralement vers l'avant à partir desdits canaux (92) et en communication d'écoulement d'air chaud avec celle-ci et dans lequel ladite extrémité avant dudit corps (88) est formée ayant un orifice d'air chaud (98) pour diriger le gaz chaud sur une pièce de travail, ladite canalisation (94) étant en communication d'écoulement d'air à l'aide dudit orifice (98).

12. Outil de soudage à gaz chaud selon la revendication 1, dans lequel le corps (102) comporte un corps (102) analogue à une aiguille allongée ayant une extrémité avant pointue (105) et une extrémité arrière formant base et étant constitué d'un métal non-mouillable par de la soudure et ladite formation de canaux est située sur sa longueur pour fournir un trajet dirigé pour un gaz chaud dans une relation d'échange thermique avec ledit corps (102), et
un élément formant base (24') disposé autour de ladite extrémité arrière formant base dudit corps analogue à une aiguille (102) et ayant un alésage circulaire de retenue coopérant de manière supportante autour de celui-ci tout en fournissant un écoulement d'air ininterrompu axialement le long de son corps muni de canaux (102),
ledit élément formant base (24') comportant des moyens de retenue filetés (24') fixant ledit corps (102) sur l'avant de l'outil de soudage.

13. Outil selon la revendication 12 dans lequel ledit élément formant base comporte un tube de support (106) allongé, pouvant être incurvé, s'étendant vers l'avant à partir de ses moyens de retenue (24') vers sa prise de support autour dudit corps analogue à une aiguille (102).

14. Outil selon la revendication 12 ou 13 dans lequel la section transversale dudit corps analogue à une aiguille (102) excepté à partir de son extrémité avant pointue est : A) triangulaire de sorte que les plats de la forme triangulaire forment lesdits canaux, ou B) carré de sorte que les plats de la forme carrée forment lesdits canaux, ou C) rectangulaire de sorte que les plats de la forme rectangulaire forment lesdits canaux, ou D) hexagonale de sorte que les plats de la forme hexagonale forment lesdits canaux.
